# EUROPÄISCHE PATENTSCHRIFT

(11) **EP 1 549 907 B1**
(45) Veröffentlichungstag und Bekanntmachung des Hinweises auf die Patenterteilung: **08.06.2011**
(21) Anmeldenummer: 03807843.2
(22) Anmeldetag: 06.10.2003
(51) Int. Cl.: G01B 21/04, B25J 9/16, G01S 5/00

(54) **VERFAHREN UND VORRICHTUNG ZUR DREIDIMENSIONALEN VERMESSUNG VON OBJEKTEN**
METHOD AND DEVICE FOR THE THREE-DIMENSIONAL MEASUREMENT OF OBJECTS
PROCEDE ET DISPOSITIF POUR EFFECTUER UNE MESURE A TROIS DIMENSIONS D'OBJETS

(30) Priorität: 08.10.2002 DE 10246781
(43) Veröffentlichungstag der Anmeldung: 06.07.2005
(73) Patentinhaber: STOTZ FEINMESSTECHNIK GmbH, D-70839 Gerlingen (DE)
(72) Erfinder: STAMENKOVIC, Milan, 70469 Stuttgart (DE)
(74) Vertreter: Manitz, Finsterwald & Partner GbR
(86) Internationale Anmeldenummer: PCT/EP2003/011031
(87) Internationale Veröffentlichungsnummer: WO 2004/033991

(56) Entgegenhaltungen:
- EP-A- 0 895 096
- EP-A- 1 122 513
- WO-A-93/04381
- DE-A1- 19 534 415
- DE-A1- 19 534 415
- DE-A1- 19 742 335
- DE-A1- 19 742 335
- FR-A1- 2 754 350
- FR-A1- 2 754 350
- GB-A- 2 285 550
- US-A- 4 691 446
- US-A- 6 157 368
- US-A1- 2002 029 128

## Beschreibung

Die Erfindung betrifft ein Verfahren und eine Vorrichtung zur dreidimensionalen Vermessung von Objekten nach dem Oberbegriff des Anspruchs 1 beziehungsweise des Anspruchs 6.

Bei bekannten Verfahren zur dreidimensionalen Vermessung von Objekten, wie beispielsweise Werkstücken, werden die Objekte auf einem Messtisch positioniert, an dem eine Vorrichtung mit einem Messelement zum Abtasten der äußeren Konturen der Objekte beweglich angeordnet ist, wobei die Position des Messelementes über lineare dreidimensionale Messweggeber in x-, y- und z-Richtung bestimmt werden kann. Der Messtisch ist in der Regel ein geschliffener, massiver Marmorblock, der meist ortsfest installiert ist.

Das Messelement besteht beispielsweise aus einer Antast-Messkugel, die mechanisch mit einem Kraftsensor verbunden ist, um einen fortwährenden Kontakt mit dem Objekt zu gewährleisten. Beim Abtasten wird die Messkugel mit dem Objekt in Kontakt gebracht und entlang des Objektes bewegt. Ein Rechner ermittelt aus der Bewegung der Messkugel entlang des Objektes mittels der linearen Messweggeber, die zu dem Messtisch eine exakt festgelegte Position haben, die äußeren Abmessungen des dreidimensionalen Objektes. Zur Messung von Innenabmessungen werden andere Vorrichtungen mit pneumatischen Messdornen verwendet, die auch in Öffnungen des Werkstücks hinein positioniert werden können.

Derartige Vorrichtungen zur dreidimensionalen Vermessung von Objekten werden sehr selten direkt in Produktionshallen eingesetzt, da beispielsweise dort verwendetes Wasser oder Öl, anfallende Späne, auftretende Vibrationen und elektrische Störungen zu Messungenauigkeiten führen können. Ein zusätzlicher Nachteil ist die relativ niedrige Messgeschwindigkeit wegen der linearen Messweggeber und der große Platzbedarf wegen der massiven Marmor-Messtische.

In der Industrie werden deswegen oft spezielle Messvorrichtungen verwendet, die nur für eine Messaufgabe, wie beispielsweise für eine Durchmessermessung eines Kolbens, optimiert sind. Dabei werden als Messelemente neben Antastkugeln auch elektrisch-pneumatische Wandler, Kapazitivsensoren und Induktivtaster eingesetzt. Die Werkstücke werden in die Messvorrichtung mit einem Händhabungssystem gebracht, das sehr komplex aufgebaut sein kann. Ferner wird zum Entfernen der Werkstücke aus der Messvorrichtung, beispielsweise für die Klassierung in verwendbare und nicht verwendbare oder nachzuarbeitende Werkstücke, wiederum ein Handhabungssystem benötigt.

Für große, zu vermessende Objekte, wie Autokarosserien, sind Messelemente zum Abtasten des Objektes beispielsweise an einem Kran oder Stativ vorgesehen. Der Kran oder das Stativ und das zu vermessende Objekt sind relativ zueinander bewegbar, um das Objekt abschnittsweise mit den am Kran oder Stativ angeordneten Messelementen abzutasten. Nachteilig ist dabei, dass es aufgrund der Abmessungen des Stativs oder der Reichweite des Krans eine Beschränkung hinsichtlich der Größe der ausmessbaren Objekte gibt. Zudem ist das Stativ oder der Kran zumeist ortsfest installiert, und kann daher schlecht zur Vermessung von Objekten an einen anderen Ort transportiert werden.

Die Vermessung von größeren Objekten und Räumen erfordert daher sehr oft einen hohen Aufwand. Da die Vermessung von großen Objekten in der Regel punktuell ist, wird die tatsächliche Form der Objekte aus Kostengründen durch Messung weniger Punkte und Inter-bzw. Extrapolieren ermittelt. Dies kann zu erheblichen Ungenauigkeiten der Messdaten führen.

Ein Verfahren gemäß dem Oberbegriff von Anspruch 1 und eine Vorrichtung gemäß dem Oberbegriff von Anspruch 6 sind aus der DE 195 34 415 A1, der FR 2 754 350 A1 und der DE 197 42 335 A1 bekannt.

Aufgabe der Erfindung ist es, eine verbesserte Vorrichtung und ein verbessertes Verfahren zur dreidimensionalen Vermessung von Objekten anzugeben, mit denen die oben genannten Nachteile zumindest weitestgehend beseitigt werden.

Die Lösung der Aufgabe erfolgt durch die Merkmale der unabhängigen Ansprüche 1 und 6.

Erfindungsgemäß ist vorgesehen, dass bei einem Verfahren zur dreidimensionalen Vermessung von Objekten, bei dem ein Messelement im Raum relativ zu einem auszumessenden Objekt, insbesondere entlang dessen Oberfläche, bewegt, die Positionen des Messelementes relativ zu einem insbesondere festen Bezugssystem festgestellt und die Masse des untersuchten Objektes aus den festgestellten Positionen des Messelementes ermittelt werden, die Positionen des Messelementes durch ein Ortungsverfahren in Bezug auf ein durch das zugehörige Ortungssystem festgelegtes Bezugssystem bestimmt und aus den festgestellten Positionen des Messelementes gewünschte Maße des Objektes berechnet werden.

Erfindungsgemäß werden also nicht wie bisher lineare Messweggeber verwendet, um die Position des Messelementes während der Messung zu bestimmen, sondern ein Ortungsverfahren, mit dem die Position des Messelementes sehr genau erfasst werden kann. Durch Verwendung eines Ortungsverfahrens zur Bestimmung der Position des Messelementes ist das Verfahren zur dreidimensionalen Vermessung auch weniger störanfällig bezüglich Schwingungen. Es ist daher nicht nötig, einen massiven, ortsfesten Messtisch zu verwenden und das erfindungsgemäße Verfahren kann auch in industrieller Umgebung, das heißt direkt an der Produktionsstätte eingesetzt werden.

Zudem ist das Verfahren und die Vorrichtung zur dreidimensionalen Vermessung von Objekten nicht auf eine maximale Größe der zu vermessenden Objekte beschränkt, da mit Hilfe des Ortungsverfahrens ein großer räumlicher Bereich vermessen werden kann. Ferner kann die Vorrichtung zur dreidimensionalen Vermessung von Objekten relativ einfach transportiert und daher für eine Vermessung von Objekten an unterschiedlichen Orten eingesetzt werden. Vor allem wird ein schnelles und präzises Vermessen im dreidimensionalen Raum ermöglicht, da die Bewegung des Messelements durch das Ortungsverfahren nicht wie bei linearen Messweggebern eingeschränkt ist.

Zur Ortung des Messelementes kann mindestens ein physikalisches Feld, insbesondere ein akustisches, optisches und/ oder elektromagnetisches Feld, aufgebaut werden. Dies erfolgt insbesondere durch mehrere, um die Messstelle herum positionierte Geber als Feldquellen des physikalischen Feldes, beispielsweise Quellen für sichtbares und/oder unsichtbares Licht, deren Positionen das Bezugssystem für das Ortungsverfahren festlegen. Aus der Ausbreitungsgeschwindigkeit des physikalischen Feldes kann die Entfernung zwischen den Gebern des physikalischen Feldes und dem Messelement aus der Signallaufzeit sehr genau bestimmt werden. Je mehr Geber im Raum verteilt eingesetzt werden, desto genauer kann die Position des Messelementes bestimmt werden. Dies ermöglicht die Vermessung dreidimensionaler Objekte mit einer Genauigkeit von bis zu etwa + 1, um.

In einer Ausführungsform kann zur Ortung des Messelementes ein unidirektionales Ortungssystem, insbesondere nach Art des Global Positioning Systems, GPS, verwendet werden. Infolgedessen handelt es sich um ein Verfahren, bei dem mittels der Laufzeit der Signale zwischen den Gebern und entsprechenden Sensoren an oder bei dem Messelement eine Einweg-Entfernungsmessung durchgeführt wird. Dadurch wird der Messfehler klein gehalten und zudem die Berechnung der Masse des Objektes aus den festgestellten Positionen des Messelements beschleunigt.

Erfindungsgemäß kann das Messelement das Objekt mechanisch abtasten. Dies kann beispielsweise mit Hilfe einer Antastkugel erfolgen, die entlang der Oberfläche des zu vermessenden Objektes gerollt wird. Das Abtasten kann aber auch berührungslos, nämlich induktiv, kapazitiv oder mit einem pneumatischen Dorn erfolgen, so dass auch empfindliche Oberflächen vermessen werden können. Die ermittelte Position des Messelementes wird dann mit dem induktiv, kapazitiv oder pneumatisch ermittelten Abstand des Messelementes von der Oberfläche korrigiert, um die Position des Messpunktes auf der Oberfläche zu bestimmen. Die Abtastung erfolgt entweder kontinuierlich oder an einzelnen Abtastpunkten, wobei bei jeder Abtastung die aktuelle Position der Messelemente ermittelt und als Messwert gespeichert wird.

Erfindungsgemäß wird das Messelement mit einem Flugobjekt bewegt. Das Flugobjekt wird dabei per Kabel oder per Fernsteuerung manövriert, beispielsweise kann es sich um einen Modellhubschrauber handeln. Dies ermöglicht die Vermessung auch von großen Objekten, wobei nicht nur die äußere Oberfläche von Gegenständen, wie Autokarosserien, sondern beispielsweise auch die innere Oberfläche von Räumen vermessen werden kann.

Des weiteren können auswechselbare Messelemente verwendet werden. Dies ermöglicht den wahlweisen oder aufeinander folgenden Einsatz verschiedener Abtastverfahren, beispielsweise mit mechanischen oder induktiven Abtastelementen. Außerdem kann, wenn das Messelement mit einem Roboterarm bewegt wird, ein zu vermessendes Objekt zunächst von einem Greifer des Roboterarms positioniert und anschließend mit einem von demselben oder einem zweiten Greifer aufgenommenen auswechselbaren Messelement vermessen werden.

Das Ortungssystem kann ferner über die Geber und Sensoren durch Selbstkalibrierung kalibriert werden. Dies ermöglicht eine in kurzen Zeitabständen durchgeführte Neukalibrierung des Systems, für die die Messung nur kurzzeitig unterbrochen werden muss.

Das Messelement kann außerdem drahtlos, insbesondere induktiv oder mittels eines Akkumulators, mit Energie versorgt werden. Zudem können die Messdaten des Messelementes drahtlos, insbesondere induktiv oder per Funk, übertragen werden. In beiden Fällen wird das Auswechseln eines Messelementes vereinfacht und die Vermessung mit verschiedenen Messelementen beschleunigt.

Das Objekt kann zum Vermessen auf einer Nullposition positioniert werden. Dies vereinfacht die Messung, da der Ort des Messobjektes nicht erst ermittelt werden muss.

In einer weiteren Ausführungsform kann das zu vermessende Objekt nach einem Raster, insbesondere einem asymmetrischen Raster, ausgemessen werden. Durch Vorsehen von weniger Rasterpunkten in bestimmten, weniger genau auszumessenden Bereichen kann die Vermessung des Objektes beschleunigt werden.

Weitere vorteilhafte Ausführungsformen der Erfindung sind in der nachfolgenden Figurenbeschreibung, den Zeichnungen und den Unteransprüchen angegeben.

Nachfolgend wird die Erfindung rein beispielhaft unter Bezugnahme auf die beigefügten Zeichnungen beschrieben. Es zeigen:
- Fig. 1: eine perspektivische Ansicht einer nicht erfindungsgemäßen Vorrichtung in schematischer Darstellung;
- Fig. 2: eine perspektivische Ansicht einer Ausführungsform einer er- findungsgemäßen Vorrichtung ebenfalls in schematischer Darstellung.

### Vergleichsbeispiel

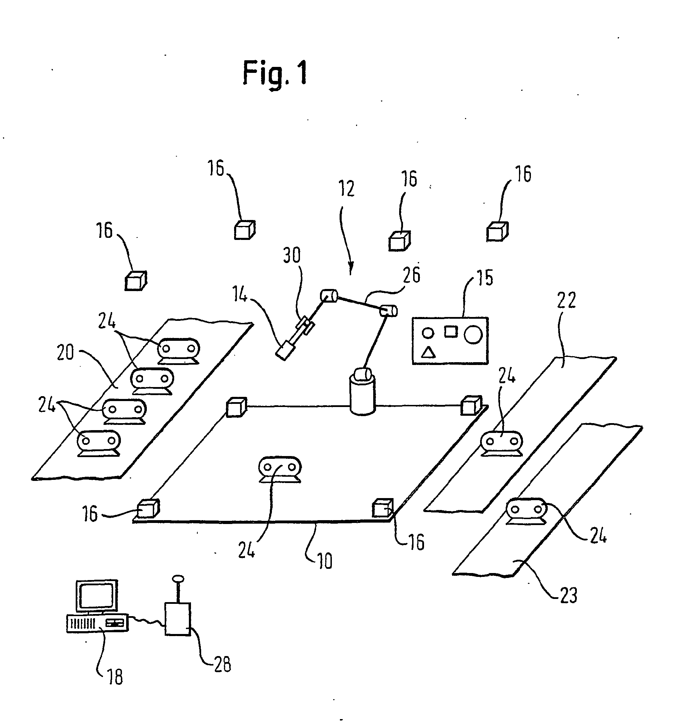

Die erste, in Fig. 1 gezeigte Vorrichtung umfasst einen Messtisch 10, einen Roboter 12, ein Messelement 14, eine Ablage 15 für verschiedene Messelemente, eine Mehrzahl von Gebern 16 und einen Mess-und Steuerrechner 18. Zur Verdeutlichung eines in der Produktion einsetzbaren Messablaufs sind in Fig. 1 auch ein Zuführband 20 und zwei Abführbänder 22 und 23 für zu vermessende, respektive bereits gemessene Werkstücke 24 dargestellt.

Die Geber 16 sind im Raum und auf dem Messtisch derart angeordnet, dass sie um das Werkstück 24 herum verteilt sind. Es handelt sich bei den Gebern 16 beispielsweise um Sender für ein Funksignal, insbesondere GPS-Signal.

Der Roboter 12 ist am Messtisch 10 angeordnet und weist einen Greifarm 26 auf, dessen freies Ende das Messelement 14 hält. Bei dem Roboter handelt es sich vom Grundaufbau her um einen üblichen Industrieroboter, der mit dem Greifarm 26 nicht nur das Messelement 14 von der Ablage 15 aufnimmt, sondern auch vor dem Messen das jeweilige zu vermessende Werkstück 24 vom Zuführband 20 aufnimmt und auf dem Messtisch 10 positioniert und nach dem Messen das vermessene Werkstück 24 auf dem Abführband 22 oder 23 ablegt, je nachdem, ob das Werkstück in Ordnung ist oder Ausschuss darstellt.

Der Greifarm 26 weist an seinem freien Ende einen Greifer 30, mit dem das Messelement 14 aufgenommen wird, einen hier nicht dargestellten Sensor für das von den Gebern 16 erzeugte elektromagnetische Feld sowie ein ebenfalls nicht dargestelltes Funkelement auf, das die vom Sensor empfangenen Signale der Geber 16 an ein Sende- und Empfangsmodul 28 des Mess- und Steuerrechners 18 überträgt.

Das Messelement 14 umfasst beispielsweise einen nicht dargestellten Induktivtaster zum Abtasten der Oberfläche des Werkstückes 24 und ein ebenfalls nicht dargestelltes Funkelement für die Kommunikation mit dem Steuer- und Messrechner 18. Alternativ können die Daten des Messelementes 14 induktiv an einen Empfänger im Greifarm 26 und von diesem über elektrische Leitungen an den Mess- und Steuerrechner 18 übertragen werden. Zudem wird das Messelement 14 mittels einer nicht dargestellten Induktivkupplung über den Greifarm 26 mit Energie versorgt. Durch diese Ausgestaltung ist das Messelement 14 auswechselbar ausgebildet und kann durch den Greifarm 26 des Roboters 12 von der Ablage 15 aufgenommen und sofort funktionstüchtig eingesetzt werden.

Der Mess- und Steuerrechner 18 ist - wie oben erwähnt - mit einem Sende- und Empfangsmodul 28 ausgestattet. Dieses Sende- und Empfangsmodul 28 empfängt nicht nur die Signale der Geber 16, sondern funkt auch Steuersignale an die Geber 16, den Roboter 12 und an das Messelement 14. Zusätzlich kann das Sende- und Empfangsmodul 28 die Messdaten des Messelementes 14 und des Sensors am Greifarm 26 empfangen.

Um die Vermessung durchzuführen, wird das erste zu vermessende Werkstück 24 auf dem Zuführband vom Greifarm 26 des Roboters 12 ergriffen und auf dem Messtisch 10 positioniert. Dort wird das Werkstück 24 fixiert, beispielsweise von Elektromagneten am Tisch angezogen. Anschließend nimmt der Greifarm 26 das Messelement 14 von der Ablage 15 auf und tastet mit dem Messelement 14 das Werkstück 24 ab. Bei jeder Abtastung werden die vom Sensor am Greifarm 26 empfangenen Signale des von den Gebern 16 erzeugten elektromagnetischen Feldes von dem am Greifer vorhandenen Funkelementen an den Mess- und Steuerrechner 18 übermittelt.

Der Mess- und Steuerrechner 18 bestimmt anhand der Signale des Sensors die Laufzeiten der Signale des elektromagnetischen Feldes zwischen den Gebern 16 und dem Sensor. Die gesuchten Entfernungen zwischen den Gebern 16 und dem Sensor ergeben sich aus dem Produkt der Ausbreitungsgeschwindigkeit des elektromagnetischen Feldes, die bekannt ist, und der Laufzeit des jeweiligen Signals. Ferner ermittelt der Mess- und Steuerrechner 18 aus den berechneten Entfernungen die aktuelle Position des Sensors und damit des Messelementes 14, während dieses das Werkstück 24 abtastet, und ordnet diese Daten der jeweiligen Messung zu. Die Maße des Werkstücks 24 werden aus den ermittelten Positionen des Messelementes 14 und bei berührungsloser Abtastung dem Abstand des Messelementes 14 vom Werkstück 24 bestimmt.

Auf diese Weise können die Maße des Werkstücks sehr genau ermittelt werden, ohne dass eine weitere Einrichtung zur dreidimensionalen Vermessung eingesetzt werden muss. Durch die Verwendung eines herkömmlichen Messelementes 14 mit einem im Grundaufbau üblichen Industrieroboter 12 entfällt der Aufwand für eine Konstruktion spezieller Messvorrichtungen. Dies ermöglicht zudem, dass der Roboter 12 nicht nur für das Messen, sondern auch für das Positionieren der Werkstücke 24 verwendet werden kann. Diese Mehrfachnutzung des Roboters 12 wird durch die auswechselbare Ausführung der Messelemente 14 unterstützt.

Die Anwendung des beschriebenen Ortungssystems bei der dreidimensionalen Vermessung der Werkstücke 24 ermöglicht zudem eine hochgenaue Steuerung des Greifarms 26 und Bestimmung der Werkstückmasse unter Verwendung der ermittelten Positionen des Sensors, ohne dass die klassischen linearen X-Y-Z-Messweggeber herkömmlicher 3D-Messvorrichtungen eingesetzt werden müssen. Außerdem ist für die hochgenaue Ermittlung der dreidimensionalen Kontur der Werkstücke 24 auch kein Stabilisierungs-Marmorblock als Messtisch nötig. Gleichzeitig wird wegen der Verwendung des Ortungsverfahrens zur Positionsbestimmung eine Vermessung dreidimensionaler Objekte mit einer Genauigkeit von bis zu ± 1 µm ermöglicht.

### Erfindungsgemäße Ausführungsform

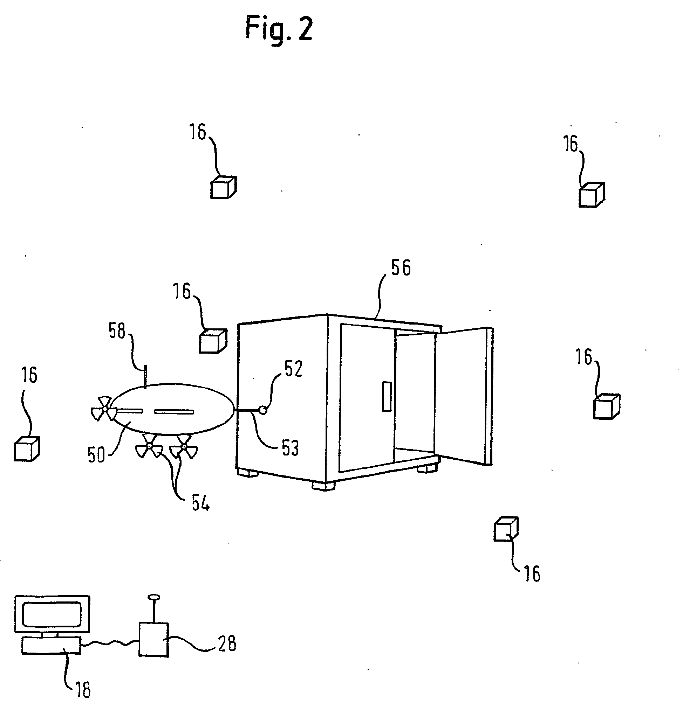

In Fig. 2 ist eine Ausführungsform der erfindungsgemäßen Vorrichtung zur dreidimensionalen Vermessung von Objekten dargestellt. Bestandteile dieser Vorrichtung, die mit Bestandteilen des Vergleichsbeispiels übereinstimmen, sind mit gleichen Bezugszeichen versehen.

Die erfindungsgemäße Ausführungsform umfasst ein in Art eines Zeppelins ausgebildetes Flugobjekt 50, im folgenden Zeppelin genannt, ein Messelement 52 auf einem Träger 53, Geber 16 und einen Mess-und Steuerrechner 18.

Der Zeppelin 50 besitzt Auftriebs-und Steuermotoren 54, um den Zeppelin 50 im Raum um ein zu vermessendes Objekt 56-in der Figur als ein Schrank dargestellt-zu bewegen. Die Auftriebs-und Steuermotoren 54 werden über Steuersignale, die vom Sende-und Empfangsmodul 28 des Mess-und Steuerrechners an eine Antenne 58 des Zeppelins ausgesandt werden, gesteuert. Auf der Vorderseite des Zeppelins 50 ist das Messelement 52 vorgesehen. Die Messdaten des Messelementes 52 können über die Antenne 58 an das Sende-und Empfangsmodul 28 des Mess-und Steuerrechners 18 übertragen werden.

Der Zeppelin 50 trägt ferner mindestens einen in Fig. 2 nicht dargestellten Sensor zum Empfangen der Signale des von den Gebern 16 erzeugten elektromagnetischen Feldes, insbesondere GPS-Signale. Die Sensoren haben dabei eine definierte Lage auf oder im Zeppelin bezüglich des Messelementes 52, die bei einem länglichen Träger 53 des Messelementes 52 mittels einer Berechnung der räumlichen Orientierung des Trägers 53 relativ zu den Sensoren bestimmt werden kann.

Die Energieversorgung des Zeppelins 50 wird über in Fig. 2 nicht dargestellte Hochenergieakkumulatoren gesichert, es kann aber auch ein Kabel für die Energieversorgung vorgesehen sein.

Das Messelement 52 ist als Antastkugel ausgebildet, die am freien Ende des am Zeppelin angebrachten Trägers 53 angeordnet ist. Zur schnellen Aufnahme eines Messwegs in Form einer Mantellinie des Schrankes 56 kann ein Induktivtaster als der Träger 53 vorgesehen sein. So wird der mechanische Kontakt mit dem Objekt gesichert und die Reibung zwischen der Abtastkugel und dem Objekt verkleinert.

Im Betrieb wird der Zeppelin 50 vom Mess-und Steuerrechner 18 per Funk gesteuert derart im Raum um den zu vermessenden Schrank 56 bewegt, dass die Antastkugel des Messelements 52 mit der Oberfläche des zu vermessenden Schrankes 56 in Kontakt kommt. Um größere Objekte schnell und genau abtasten zu können, ist der Raum in ein im Mess-und Steuerrechner gespeichertes Raster eingeteilt. Das Raster kann asymmetrisch sein, um an bestimmten Stellen des Raumes eine große Anzahl von Punkten mit dem Zeppelin 50 ansteuern beziehungsweise mit dem Messelement 52 abtasten zu können.

Nachdem das Messelement 52 in Kontakt mit dem Schrank 56 gekommen ist, wird der Zeppelin 50, während die Antastkugel des Messelements 52 mit der Oberfläche des Schrankes 56 weiter in Kontakt steht, entlang des Schrankes bewegt, um gewünschte Masse des Schrankes 56 zu ermitteln.

Zu diesem Zweck wird, wie in der ersten Ausführungsform, eine Entfernungsmessung zwischen den Gebern 16 und den Sensoren ausgeführt und aus den ermittelten Entfernungswerten die Position des Zeppelins und damit die Position des Messelementes 52 bestimmt. Die von den Sensoren empfangenen Signale der Geber 16 werden dazu per Funk über die Antenne 58 an den Mess-und Steuerrechner 18 übermittelt. Gleichzeitig überprüft der Mess-und Steuerrechner 18, ob die Antastkugel in Kontakt mit dem Schrank steht. Die zu bestimmenden Masse des Schrankes 56 werden aus den ermittelten Positionen des Messelementes 52 und bei berührungsloser Messung dem Abstand des Messelementes 52 von der Oberfläche berechnet.

Die erfindungsgemäße Ausführungsform ist also eine Art fliegende Sonde zur dreidimensionalen Vermessung und ermöglicht wegen der großen Reichweite des Zeppelins 50 nicht nur die dreidimensionale Vermessung großer Objekte, sondern auch die Vermessung von Innenräumen.

Dazu können auch Lichtquellen oder Schallquellen, beispielsweise Ultraschallquellen, alleine oder miteinander kombiniert eingesetzt werden. Die Sensoren auf dem Zeppelin 50 können dann optische beziehungsweise akustische Interferometer umfassen, die Phasenverschiebungen bestimmen, mit denen die Positionen des Messelementes und damit die Maße großer Objekte oder die Maße von Innenräumen noch genauer bestimmt werden können.

Die Sensoren für das Feld können nicht nur am Greifer oder auf dem Flugobjekt angeordnet sein, sondern alternativ oder zusätzlich am oder im Messelement, falls dort genügend Platz vorhanden ist, oder auch an einem Träger des Messelementes. Zudem können interne, feldunabhängige Sensoren vorgesehen sein, um die Orientierung der Messelemente im Raum, insbesondere relativ zum Greifer, festzustellen.

### Bezugszeichenliste

- 10: Messtisch
- 12: Roboter
- 14: Messelement
- 15: Messelementeablage
- 16: Geber
- 18: Mess- und Steuerrechner
- 20: Zuführbahn
- 22, 23: Abführbahn
- 24: Werkstück
- 26: Greifarm
- 28: Sende- und Empfangsmodul
- 30: Greifer
- 50: Zeppelin
- 52: Messelement
- 53: Träger
- 54: Auftrieb- und Steuermotor
- 56: Objekt
- 58: Antenne

## Patentansprüche

1. Verfahren zur dreidimensionalen Vermessung von Objekten, bei welchem ein Messelement (14; 52) im Raum relativ zu einem auszumessenden Objekt, insbesondere entlang dessen Oberfläche, bewegt, die Positionen des Messelementes (14; 52) relativ zu einem insbesondere festen Bezugssystem festgestellt und die Maße des untersuchten Objektes (24; 56) aus den festgestellten Positionen des Messelementes (14; 52) ermittelt werden, wobei die Positionen des Messelementes (14; 52) durch ein Ortungsverfahren in Bezug auf ein durch das zugehörige Ortungssystem (16) festgelegtes Bezugssystem bestimmt und aus den so festgestellten Positionen des Messelementes (14; 52) gewünschte Maße des Objektes (24; 56) berechnet werden, wobei das Messelement (14; 52) mit einem Flugobjekt (50) bewegt wird,
**dadurch gekennzeichnet,**
**dass** das Messelement (14; 52) das Objekt (24; 56) mechanisch oder durch induktive, kapazitive oder pneumatische Abstandsmessung abtastet.

2. Verfahren nach Anspruch 1,
**dadurch gekennzeichnet,**
**dass** zur Ortung des Messelementes (14; 52) mindestens ein physikalisches Feld, insbesondere ein akustisches, optisches und/oder ein elektromagnetisches Feld, aufgebaut wird.

3. Verfahren nach einem der vorstehenden Ansprüche,
**dadurch gekennzeichnet,**
**dass** zur Ortung des Messelementes (14; 52) ein unidirektionales Ortungssystem (16), insbesondere nach Art des so genannten Global Positioning Systems, GPS, verwendet wird.

4. Verfahren nach einem der vorstehenden Ansprüche,
**dadurch gekennzeichnet,**
**dass** mindestens ein auswechselbares Messelement (14; 52) verwendet wird und/oder dass das Ortungssystem (16) durch Selbstkalibrierung kalibriert wird und/oder dass das Messelement (14; 52) drahtlos, insbesondere induktiv oder mittels eines Akkumulators, mit Energie versorgt wird.

5. Verfahren nach einem der vorstehenden Ansprüche,
**dadurch gekennzeichnet,**
**dass** die Messdaten des Messelementes (14; 52) drahtlos, insbesondere induktiv oder per Funk, übertragen werden und/ oder dass das Objekt (24; 56) zum Vermessen auf einer Nullposition positioniert wird und/oder dass das zu vermessende Objekt (24; 56) nach einem Raster, insbesondere einem asymmetrischen Raster, ausgemessen wird.

6. Vorrichtung zur dreidimensionalen Vermessung von Objekten mit einem im Raum relativ zu einem auszumessenden Objekt, insbesondere entlang dessen Oberfläche, beweglichen Messelement (14; 52), Mitteln zur Feststellung der Position des Messelementes (14; 52) an den Messorten relativ zu einem insbesondere festen Bezugssystem und Mitteln zur Ermittlung der Maße des Objektes (24; 56) aus den festgestellten Positionen des Messelementes (14; 52), wobei ein Ortungssystem (16) zur Bestimmung der Position des Messelementes (14; 52) in Bezug auf das durch das Ortungssystem (16) festgelegte Bezugssystem und Mittel (18) zur Berechnung von Objektmaßen aus den so festgestellten Positionen vorgesehen sind, wobei das Messelement (14; 52) an einem nicht das auszumessende Objekt darstellenden Flugobjekt (50) angeordnet ist,
**dadurch gekennzeichnet,**
**dass** das Messelement (14; 52) als mechanisches, induktives, kapazitives oder pneumatisches Abtastelement ausgebildet ist.

7. Vorrichtung nach Anspruch 6,
**dadurch gekennzeichnet,**
**dass** das Ortungssystem (16) Mittel (16) zum Aufbauen mindestens zweier physikalischer Felder, insbesondere eines akustischen und eines optischen und/oder elektromagnetischen Feldes, aufweist.

8. Vorrichtung nach einem der Ansprüche 6 oder 7,
**dadurch gekennzeichnet,**
**dass** das Ortungssystem (16) als ein unidirektionales Ortungssystem (16), insbesondere nach Art des so genannten Global Positioning Systems, GPS, ausgebildet ist

9. Vorrichtung nach einem der Ansprüche 6 bis 8,
**dadurch gekennzeichnet,**
**dass** das Messelement (14; 52) auswechselbar ausgebildet ist und/oder dass Mittel zur Selbstkalibrierung des Ortungssystems vorgesehen sind.

10. Vorrichtung nach einem der Ansprüche 6 bis 9,
**dadurch gekennzeichnet,**
**dass** Mittel (28) zur drahtlosen Energieversorgung des Messelementes (14; 52) vorgesehen sind, insbesondere Mittel zur induktiven Energieversorgung oder ein Akkumulator und/oder dass Mittel zur drahtlosen Übertragung der Messdaten vorgesehen sind, insbesondere Mittel zur induktiven Übertragung oder zur Übertragung per Funk und/oder dass eine Nullposition für das auszumessende Objekt (24; 56) vorgesehen ist.

## Claims

1. A method of three-dimensional measurement of objects, wherein a measurement element (14; 52) moves in space relative to an object to be measured, in particular along its surface, the positions of the measurement element (14; 52) are determined relative to a reference system, in particular with reference to a fixed reference system, and the dimensions of the examined object (24; 56) are determined from the determined positions of the measurement element (14; 52), wherein the positions of the measurement element (14; 52) are determined by a location process with respect to a reference system defined by the associated location system (16) and desired dimensions of the object (24; 56) are calculated from the thus determined positions of the measurement element (14; 52), wherein the measurement element (14; 52) is moved with a flying object (50)
**characterised in that**
the measurement element (14; 52) scans the object (24; 56) mechanically or by inductive, capacitive or pneumatic spacing measurement.

2. A method in accordance with claim 1,
**characterised in that**
at least one physical field, in particular an acoustic, optical and/or an electromagnetic field, is set up for locating the measurement element (14; 52).

3. A method in accordance with one of the preceding claims,
**characterised in that**
a unidirectional location system (16), in particular in the manner of the so-called global positioning system, GPS, is used for locating the measurement element (14; 52).

4. A method in accordance with any one of the preceding claims,
**characterised in that**
at least one exchangeable measurement element (14; 52) is used; and/or **in that** the location system (16) is calibrated by self-calibration; and/or **in that** the measurement element (14; 52) is supplied with energy wirelessly, in particular inductively or by means of an accumulator.

5. A method in accordance with any one of the preceding claims,
**characterised in that**
the measurement data of the measurement element (14; 52) are transmitted wirelessly, in particular inductively or by radio; and/or in that the object (24; 56) is positioned for measurement on a zero position; and/or **in that** the object (24; 56) to be measured is measured in accordance with a pattern, in particular an asymmetric pattern.

6. An apparatus for the three-directional measurement of objects having a measurement element (14; 52) movable in space relative to an object to be measured, in particular movable along its surface, having means for determining the position of the measurement element (14; 52) at the measurement locations relative to a reference system, in particular relative to a fixed reference system, and having means for determining the dimensions of the object (24; 56) from the determined positions of the measurement element (14; 32), wherein a location system (16) is provided for determining the position of the measurement element (14; 52) with respect to the reference system determined by the location system (16), and means (18) are provided for calculating object dimensions from the positions thus determined, wherein the measurement element (14; 52) is arranged at a flying object (50) not representing the object to be measured,
**characterised in that**
the measurement element (14; 52) is made as a mechanical, inductive, capacitive or pneumatic scanning element.

7. An apparatus in accordance with claim 6,
**characterised in that**
the location system (16) has means (16) for setting up at least two physical fields, in particular an acoustic and an optical and/or electromagnetic field.

8. A method in accordance with one of the claims 6 or 7,
**characterised in that**
the location system (16) is made as a unidirectional location system (16), in particular in the manner of the so-called global positioning system, GPS.

9. An apparatus in accordance with any one of the claims 6 to 8,
**characterised in that**
the measurement element (14; 52) is designed as exchangeable: and/or **in that** means are provided for self-calibrating the location system.

10. An apparatus in accordance with any one of the claims 6 to 9,
**characterised in that**
means (28) for the wireless energy supply of the measurement element (14; 52) are provided, in particular means for the inductive energy supply or an accumulator; and/or **in that** means for the wireless transmission of the measurement data are provided, in particular means for inductive transmission or for the transmission by radio; and/or **in that** a zero position for the object (24; 56 to be measured is provided.

## Revendications

1. Procédé pour la mesure tridimensionnelle d'objets, dans lequel un élément de mesure (14 ; 52) est déplacé dans l'espace par rapport à un objet à mesurer, en particulier le long de sa surface, les positions de l'élément de mesure (14 ; 52) sont constatées par rapport à un système de référence, en particulier fixe, et les dimensions de l'objet analysé (24 ; 56) sont déterminées à partir des positions constatées de l'élément de mesure (14 ; 52), dans lequel les positions de l'élément de mesure (14 ; 52) sont déterminés par un procédé de localisation par référence à un système de référence fixé par le système de localisation associé (16), et les dimensions souhaitées de l'objet (24 ; 56) sont calculées à partir des positions ainsi constatées de le l'élément de mesure (14 ; 52), dans lequel l'élément de mesure (14 ; 52) est déplacé avec un objet volant (50),
**caractérisé en ce que**
l'élément de mesure (14 ; 52) palpe l'objet (24 ; 56) par voie mécanique ou par une mesure de distance inductive, capacitive ou pneumatique.

2. Procédé selon la revendication 1,
**caractérisé en ce que**, pour localiser l'élément de mesure (14 ; 52), on établit au moins un champ physique, en particulier un champ acoustique, optique et/ou un champ électromagnétique.

3. Procédé selon l'une des revendications précédentes,
**caractérisé en ce que**, pour localiser l'élément de mesure (14 ; 52), on utilise un système de localisation unidirectionnelle (16), en particulier à la manière du système dit "Global Positioning System" (GPS).

4. Procédé selon l'une des revendications précédentes,
**caractérisé en ce que** l'on utilise au moins un élément de mesure interchangeable (14 ; 52) et/ou **en ce que** le système de localisation (16) est calibré par auto-calibrage, et/ou **en ce que** l'élément de mesure (14 ; 52) est alimenté en énergie sans fil, en particulier par voie inductive ou au moyen d'un accumulateur.

5. Procédé selon l'une des revendications précédentes,
**caractérisé en ce que** les données de mesure de l'élément de mesure (14 ; 52) sont transmises sans fil, en particulier par voie inductive ou par liaison radio, et/ou **en ce que** l'objet (24 ; 56) est positionné pour la mesure à une position de zéro, et/ou **en ce que** l'objet à mesurer (24 ; 56) est mesuré selon une trame, en particulier selon une trame asymétrique.

6. Appareil pour la mesure tridimensionnelle d'objets, comprenant un élément de mesure (14 ; 52) déplaçable par rapport à un objet à mesurer, en particulier le long de sa surface, des moyens pour constater la position de l'élément de mesure (14 ; 52) aux emplacements de mesure par rapport à un système de référence, en particulier fixe, et des moyens pour déterminer les dimensions de l'objet (24 ; 56) à partir des positions constatées de l'élément de mesure (14 ; 52), dans lequel sont prévus un système de localisation (16) pour déterminer la position de l'élément de mesure (14 ; 52) par référence au système de référence fixé par le système de localisation (16) et des moyens (18) pour calculer des dimensions de l'objet à partir des positions ainsi constatées, dans lequel
l'élément de mesure (14 ; 52) est agencé sur un objet volant (50) qui ne représente pas l'objet à mesurer,
**caractérisé en ce que** l'élément de mesure (14 ; 52) est réalisé sous forme d'élément de palpage mécanique, inductif, capacitif ou pneumatique.

7. Appareil selon la revendication 6,
**caractérisé en ce que** le système de localisation (16) comprend des moyens (16) pour établir au moins deux champs physiques, en particulier un champ acoustique et un champ optique et/ou électromagnétique.

8. Appareil selon l'une des revendications 6 au 7,
**caractérisé en ce que** le système de localisation (16) est réalisé comme un système de localisation unidirectionnelle (16), en particulier à la manière du système dit "Global Positioning System" (GPS).

9. Appareil selon l'une des revendications 6 à 8,
**caractérisé en ce que** l'élément de mesure (14 ; 52) est réalisé interchangeable, et/ou **en ce qu'**il est prévu des moyens pour l'auto-calibrage du système de localisation.

10. Appareil selon l'une des revendications 6 à 9,
**caractérisé en ce qu'**il est prévu des moyens (28) pour l'alimentation d'énergie sans fil de l'élément de mesure (14 ; 52), en particulier des moyens pour l'alimentation d'énergie par voie inductive ou un accumulateur et/ou **en ce qu'**il est prévu des moyens pour la transmission sans fil des données de mesure, en particulier des moyens pour la transmission inductive ou pour la transmission par liaison radio et/ou **en ce qu'**il est prévu une position de zéro pour l'objet à mesurer (24 ; 56).
